# EUROPEAN PATENT SPECIFICATION

(11) **EP 3 892 530 B1**
(45) Date of publication and mention of the grant of the patent: **13.09.2023**
(21) Application number: 21158943.7
(22) Date of filing: 24.02.2021
(51) Int. Cl.: B63H 20/00, B63H 21/17

(54) **MARINE PROPULSION SYSTEM AND CONTROL METHOD**
SCHIFFSANTRIEBSSYSTEM UND STEUERUNGSVERFAHREN
SYSTÈME DE PROPULSION MARINE ET PROCÉDÉ DE COMMANDE

(30) Priority: 03.03.2020 JP 2020036125
(43) Date of publication of application: 13.10.2021
(73) Proprietor: Yamaha Hatsudoki Kabushiki Kaisha, Iwata-shi, Shizuoka 438-8501 (JP)
(72) Inventor: MIYAGI, Yuta, Iwata-shi, Shizuoka 438-8501 (JP)
(74) Representative: Grünecker Patent- und Rechtsanwälte PartG mbB

(56) References cited:
- EP-A1- 3 613 664
- US-A1- 2010 248 560

## Description

The present invention relates to a marine propulsion system and a method of controlling a marine propulsion system.

There has been conventionally known a type of marine propulsion device including both an engine and an electric motor as mechanical power sources for rotating a propeller of a watercraft. Such a marine propulsion device is configured to rotate the propeller only by a drive force of the electric motor in an extremely low speed range and is also configured to rotate the propeller by a drive force of the engine at a predetermined speed or greater (see JP 2017-218016 A). The electric motor is supplied with electric power from a battery through an inverter.

The prior art document EP 3 613 664 A1 discloses a marine propulsion system with marine propulsion device including a propeller shaft, an engine, an electric motor, a power transmission mechanism, an inverter, and a controller. The power transmission mechanism is configured to transmit mechanical power to the propeller shaft from at least one of the engine and the electric motor. The inverter is configured to output electric power inputted thereto to the electric motor after converting the electric power. In particular, the controller is configured provide an engine-drive-plus-electric-motor-generation-mode when the propeller shaft is rotated by the power of the engine and when the electric motor generate electricity with a portion of the power of the engine. According to a specific embodiment the engine-drive-plus-electric-motor-generation-mode provides a control in order to reduce magnetic flux density to prevent excess power generation by significantly reducing or preventing an increase in the induced voltage of the electric motor.

In some cases, a plurality of marine propulsion devices are mounted to a watercraft. For example, when three marine propulsion devices, each of which is configured as described above, are mounted to a watercraft, only two marine propulsion devices located on the port and starboard sides are configured to be driven to propel the watercraft depending on situations. At this time, the following can be assumed in the other marine propulsion device located in the middle of the two marine propulsion devices: induced voltage is generated by an electric motor when entrained rotation of the electric motor occurs through a propeller rotated by driving of the two marine propulsion devices. Besides, in the middle marine propulsion device, an inverter generates heat due to the induced voltage generated by the electric motor. Thus, concerns are adverse effects on the inverter.

It is an object of the present invention to provide a marine propulsion system and a method of controlling a marine propulsion system that can protect an inverter from induced voltage generated by entrained rotation of an electric motor in a marine propulsion system including a plurality of marine propulsion devices. According to the present invention said object is solved by a marine propulsion system having the features of independent claims 1 or 2. Moreover, said object of the present invention also solved by a method of controlling a marine propulsion system having the features of independent claim 7. Preferred embodiments are laid down in the dependent claims.

A marine propulsion system according to a first aspect of the present disclosure includes a plurality of marine propulsion devices. Each of the plurality of marine propulsion devices includes a propeller shaft, an engine, an electric motor, a power transmission mechanism, an inverter, a voltage sensor and a controller. The power transmission mechanism transmits mechanical power to the propeller shaft from at least one of the engine and the electric motor. The inverter outputs electric power inputted thereto to the electric motor after converting the electric power. The voltage sensor detects induced voltage generated by the electric motor. The controller is configured to execute protection control for protecting the inverter when the induced voltage is greater than a first threshold while the electric motor is not being driven.

A marine propulsion system according to a second aspect of the present disclosure includes a plurality of marine propulsion devices. Each of the plurality of marine propulsion devices includes a propeller shaft, an engine, an electric motor, a power transmission mechanism, an inverter, an entrained rotation determining section and a controller. The power transmission mechanism transmits mechanical power to the propeller shaft from at least one of the engine and the electric motor. The inverter outputs electric power inputted thereto to the electric motor after converting the electric power. The entrained rotation determining section determines whether or not entrained rotation of the electric motor occurs. The controller configured to execute protection control for protecting the inverter when the entrained rotation determining section determines that entrained rotation of the electric motor occurs.

A control method according to a third aspect of the present disclosure is a method of controlling a marine propulsion system. The marine propulsion system includes a plurality of marine propulsion devices. Each of the plurality of marine propulsion devices includes a propeller shaft, an engine, an electric motor, a power transmission mechanism and an inverter. The power transmission mechanism transmits mechanical power to the propeller shaft from at least one of the engine and the electric motor. The inverter outputs electric power inputted thereto to the electric motor after converting the electric motor. The method includes the following steps: detecting induced voltage generated by the electric motor; and executing protection control for protecting the inverter when the induced voltage is greater than a first threshold while the electric motor is not being driven.

### BRIEF DESCRIPTION OF THE DRAWINGS

FIG. 1 is a perspective view of a watercraft including a marine propulsion system.
FIG. 2 is a block diagram showing a configuration of the marine propulsion system.
FIG. 3 is a side view of an outboard motor.
FIG. 4 is a block diagram showing a configuration of a cooling system for cooling an inverter.
FIG. 5 is a circuit diagram of the inverter.
FIG. 6 is a flowchart showing a series of processing of protection control for the inverter.
FIG. 7 is a flowchart showing a series of processing of protection control for the inverter according to a second preferred embodiment.
FIG. 8 is a flowchart showing a series of processing of protection control for the inverter according to a third preferred embodiment.
FIG. 9 is a flowchart showing a series of processing of protection control for the inverter according to a fourth preferred embodiment.
FIG. 10 is a block diagram showing a configuration of a first outboard motor according to a fifth preferred embodiment.
FIG. 11 is a flowchart showing a series of processing of protection control for the inverter according to the fifth preferred embodiment.

### DETAILED DESCRIPTION OF EMBODIMENTS

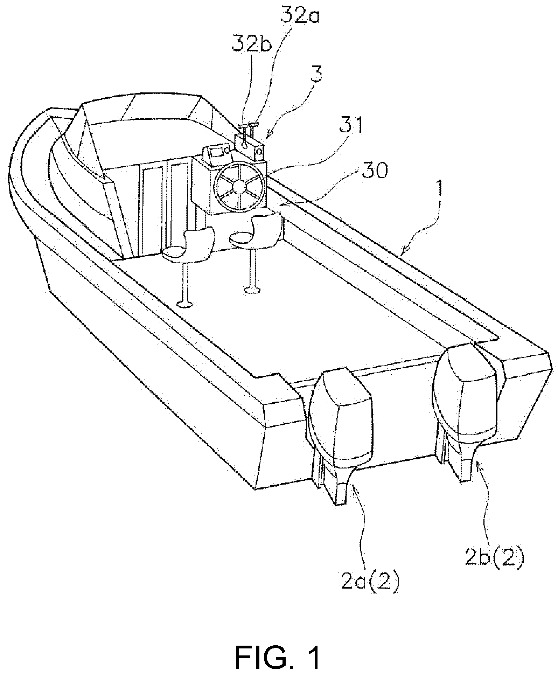

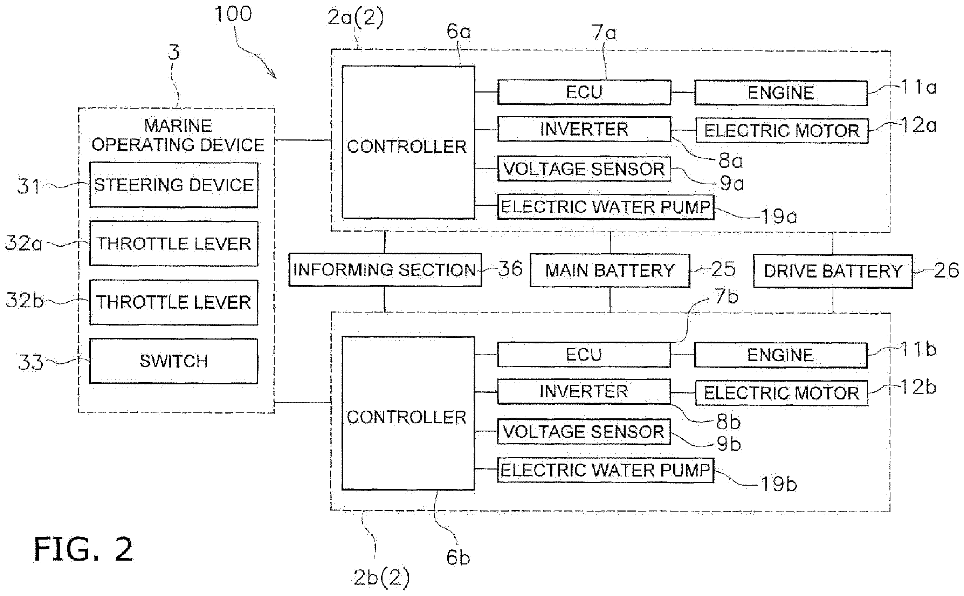

Preferred embodiments will be hereinafter explained with reference to drawings. FIG. 1 is a perspective view of a watercraft 1 including a marine propulsion system 100 according to a first preferred embodiment. FIG. 2 is a block diagram showing a configuration of the marine propulsion system 100. The marine propulsion system 100 includes a plurality of outboard motors 2 and a marine operating device 3.

Each outboard motor 2 generates a thrust for propelling the watercraft 1. Each outboard motor 2 is an exemplary marine propulsion device. In the following explanation, the outboard motor 2 attached to a port part of the stern of the watercraft 1 will be referred to as a first outboard motor 2a, whereas the outboard motor 2 attached to a starboard part of the stern of the watercraft 1 will be referred to as a second outboard motor 2b.

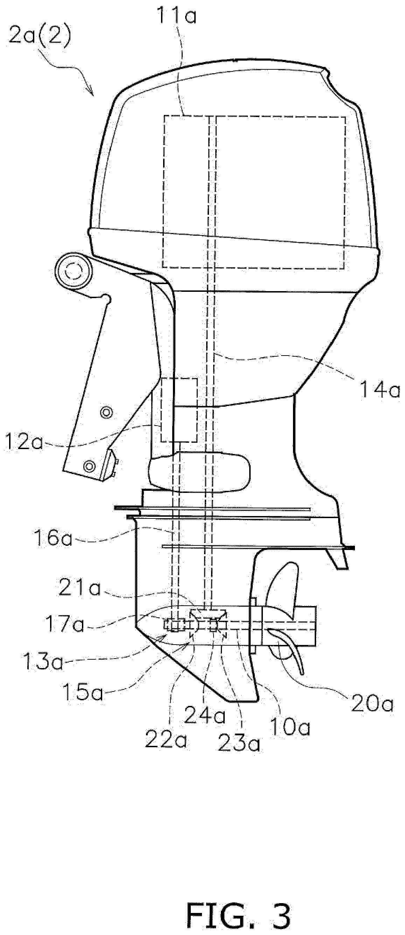

FIG. 3 is a side view of the first outboard motor 2a. The first outboard motor 2a includes a propeller shaft 10a, an engine 11a, an electric motor 12a and a power transmission mechanism 13a. It should be noted that the second outboard motor 2b has a similar structure to the first outboard motor 2a.

The propeller shaft 10a extends in the back-and-forth direction of the watercraft 1. A propeller 20a is attached to the propeller shaft 10a, while being unitarily rotated therewith. Each of the engine 11a and the electric motor 12a is a mechanical power source that generates the thrust for propelling the watercraft 1.

The power transmission mechanism 13a transmits mechanical power to the propeller shaft 10a from at least one of the engine 11a and the electric motor 12a. In the present preferred embodiment, the power transmission mechanism 13a transmits mechanical power to the propeller shaft 10a from either one of the engine 11a and the electric motor 12a. The power transmission mechanism 13a includes a drive shaft 14a, an engine clutch 15a, a motor shaft 16a and a motor clutch 17a.

The drive shaft 14a extends in the vertical direction. The drive shaft 14a is rotated when driven by the engine 11a. The engine clutch 15a connects or disconnects the drive shaft 14a and the propeller shaft 10a to or from each other. Besides, the engine clutch 15a switches between rotational directions of the propeller shaft 10a.

The engine clutch 15a includes a drive gear 21a, a forward moving gear 22a, a rearward moving gear 23a and a dog clutch 24a. The drive gear 21a is rotated unitarily with the drive shaft 14a. The forward moving gear 22a and the rearward moving gear 23a are meshed with the drive gear 21a. Rotation of the drive shaft 14a is transmitted to the forward moving gear 22a and the rearward moving gear 23a through the drive gear 21a. The dog clutch 24a is movable to a forward moving position, a neutral position and a rearward moving position.

When the dog clutch 24a is set in the forward moving position, the forward moving gear 22a is connected to the propeller shaft 10a, whereby rotation of the drive shaft 14a is transmitted to the propeller shaft 10a through the forward moving gear 22a. When the dog clutch 24a is set in the neutral position, the propeller shaft 10a is disconnected from the forward moving gear 22a and the rearward moving gear 23a, whereby rotation of the drive shaft 14a is not transmitted to the propeller shaft 10a. When the dog clutch 24a is set in the rearward moving position, the rearward moving gear 23a is connected to the propeller shaft 10a, whereby rotation of the drive shaft 14a is transmitted to the propeller shaft 10a through the rearward moving gear 23a.

The motor shaft 16a extends in parallel to the drive shaft 14a. The motor shaft 16a is rotated when driven by the electric motor 12a. The motor clutch 17a connects or disconnects the motor shaft 16a and the propeller shaft 10a to or from each other. The motor clutch 17a is movable to a connecting position or a disconnecting position. When the motor clutch 17a is set in the connecting position, rotation of the motor shaft 16a is transmitted to the propeller shaft 10a through a motor gear (not shown in the drawings). When the motor clutch 17a is set in the disconnecting position, the propeller shaft 10a is disconnected from the motor gear, whereby rotation of the motor shaft 16a is not transmitted to the propeller shaft 10a.

As shown in FIG. 2, the first outboard motor 2a includes a controller 6a, an ECU (Electric Control Unit) 7a, an inverter 8a and a voltage sensor 9a. The controller 6a controls the first outboard motor 2a. The controller 6a includes a processor such as a CPU (Central Processing Unit) and memories such as a RAM (Random Access Memory) and a ROM (Read Only Memory). The controller 6a stores programs and data for controlling the first outboard motor 2a.

The controller 6a controls movement of the engine clutch 15a and that of the motor clutch 17a through actuators (not shown in the drawings) in accordance with an operating signal transmitted thereto from the marine operating device 3. The controller 6a controls driving and output of the engine 11a and/or those of the electric motor 12a in accordance with the operating signal transmitted thereto from the marine operating device 3. It should be noted that in the present preferred embodiment, the controller 6a controls the engine clutch 15a and the engine 11a through the ECU 7a. The controller 6a may be disposed inside the first outboard motor 2a, or alternatively, may be disposed outside the first outboard motor 2a.

The ECU 7a controls the engine clutch 15a and the engine 11a based on a command issued by the controller 6a. For example, the ECU 7a controls the action of the engine clutch 15a and driving and output of the engine 11a in accordance with the command issued by the controller 6a. The ECU 7a includes a processor such as a CPU and memories such as a RAM and a ROM.

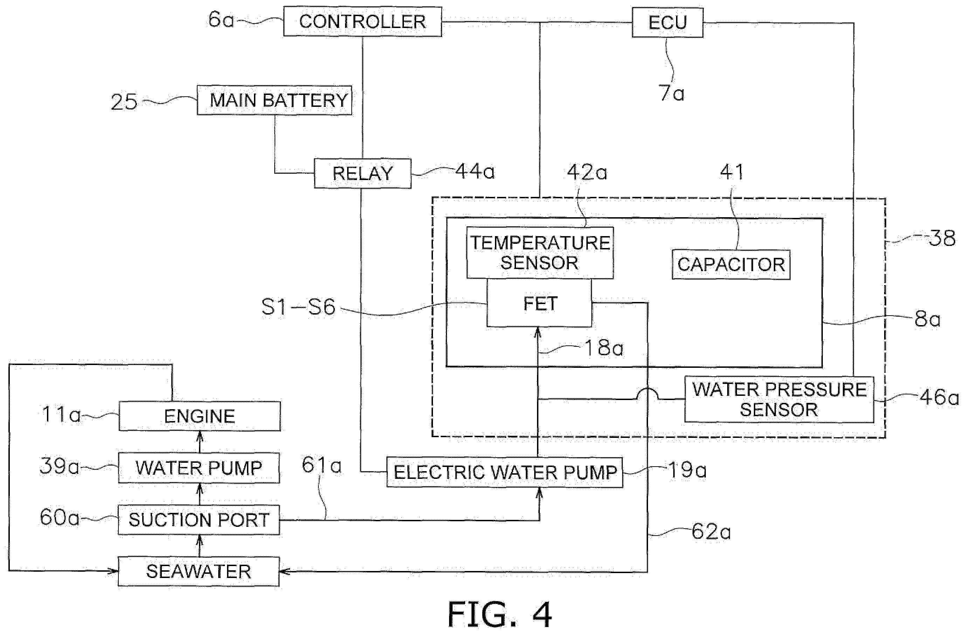

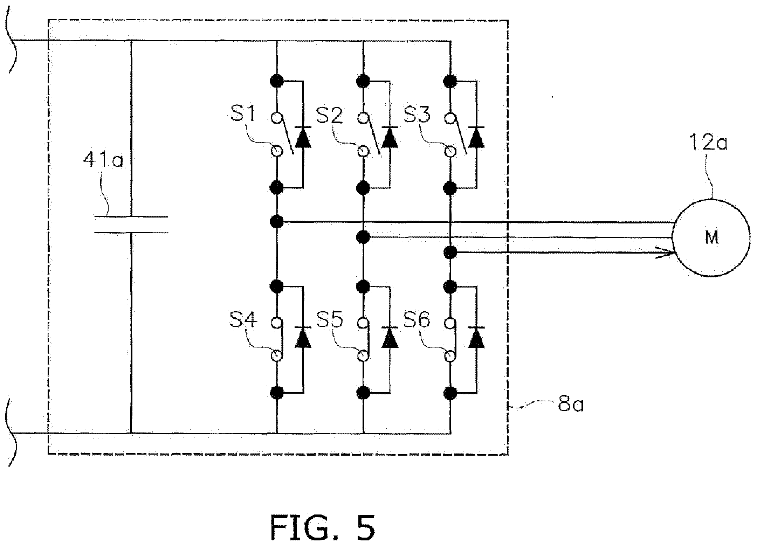

FIG. 4 is a block diagram showing a configuration of a cooling system for cooling the inverter 8a. FIG. 5 is a circuit diagram of the inverter 8a. The inverter 8a controls driving and output of the electric motor 12a in accordance with the command issued by the controller 6a. The inverter 8a converts direct voltage inputted thereto from a drive battery 26 (to be described) into alternating voltage and outputs the alternating voltage to the electric motor 12a. The inverter 8a is accommodated in a waterproof casing 38 disposed inside the first outboard motor 2a.

The inverter 8a includes switching elements S1 to S6, a capacitor 41a and a temperature sensor 42a. For example, the switching elements S1 to S6 are transistors. The switching elements S1 to S6 are composed of six switching elements corresponding to U, V and W phases. A free-wheeling diode is connected in parallel to each of the switching elements S1 to S6. The capacitor 41a is a smoothing capacitor and suppresses fluctuations in direct voltage. The temperature sensor 42a detects a temperature of the inverter 8a and outputs a detection signal to the controller 6a. The temperature sensor 42a detects, for instance, temperatures of the switching elements S1 to S6 in the inverter 8a.

The voltage sensor 9a detects induced voltage generated by the electric motor 12a and outputs a detection signal to the controller 6a. The controller 6a executes protection control for protecting the inverter 8a when the induced voltage, detected by the voltage sensor 9a, is greater than a first threshold while the electric motor 12a is not being driven. The protection control will be described below in detail.

As shown in FIG. 4, the first outboard motor 2a further includes a cooling water passage 18a and an electric water pump 19a. The cooling water passage 18a is connected to the inverter 8a. The cooling water passage 18a, when described in detail, is connected to a water jacket (not shown in the drawings) mounted to the inverter 8a.

The electric water pump 19a is connected to the cooling water passage 18a. The electric water pump 19a supplies seawater to the cooling water passage 18a. The electric water pump 19a is controlled by the controller 6a and is driven by electric power supplied thereto from a main battery 25 (to be described). The controller 6a controls driving of the electric water pump 19a by, for instance, controlling a relay 44a that connects or disconnects the electric water pump 19a and the main battery 25 to or from each other. The controller 6a drives the electric water pump 19a when the electric motor 12a is being driven. The electric water pump 19a includes a motor and an impeller.

As shown in FIG. 4, the first outboard motor 2a includes a water suction port 60a, a water suction passage 61a, and a water drainage passage 62a. The water suction port 60a is an opening for taking seawater into the first outboard motor 2a. The water suction passage 61a extends from the water suction port 60a to the cooling water passage 18a. The water drainage passage 62a is connected to the cooling water passage 18a. As depicted with arrows in FIG. 4, the seawater taken through the water suction port 60a passes through the water suction passage 61a, is supplied to the cooling water passage 18a by the electric water pump 19a, and is then drained outside the first outboard motor 2a through the water drainage passage 62a. It should be noted that the first outboard motor 2a includes a water pump 39a for cooling the engine 11a. The water pump 39a is driven by rotation of the drive shaft 14a.

The first outboard motor 2a may further include a water pressure sensor 46a for detecting the water pressure in the cooling water passage 18a. The water pressure sensor 46a detects the water pressure in the cooling water passage 18a and outputs a detection signal. The controller 6a stops driving the inverter 8a when a malfunction of the cooling water passage 18a is detected based on the detection signal outputted from the water pressure sensor 46a. The detection signal, outputted from the water pressure sensor 46a, is transmitted to the controller 6a through the ECU 7a. It should be noted that the detection signal, outputted from the water pressure sensor 46a, may be directly transmitted to the controller 6a without through the ECU 7a.

As shown in FIG. 2, the main battery 25 and the drive battery 26 for driving the electric motor 12a are connected to the first outboard motor 2a. For example, the main battery 25 is a lead battery of 12V and supplies electric power to the first outboard motor 2a. The drive battery 26 is a lead battery of 36V and supplies electric power to the inverter 8a. The drive battery 26 is composed of, for instance, three lead batteries of 12V connected in series. It should be noted that in the present preferred embodiment, both the main battery 25 and the drive battery 26 are configured to be capable of supplying electric power to the inverter 8a.

The first outboard motor 2a is provided with an electric power generator that generates electric power when driven by the engine 11a. The electric power generated by the electric power generator is supplied to the main battery 25 and the drive battery 26. The electric power generator includes, for instance, a rotor and a stator. The electric power generator generates electric power when the rotor connected to the drive shaft 14a is rotated with respect to the stator. It should be noted that the electric power, generated by the electric power generator, is supplied to the drive battery 26, for instance, after being rectified and controlled in voltage by a rectifier voltage regulator and further being increased in voltage to 36V by a DC/DC converter.

As shown in FIG. 2, similarly to the first outboard motor 2a, the second outboard motor 2b includes a controller 6b, an ECU 7b, an inverter 8b, a voltage sensor 9b, an engine 11b, an electric motor 12b and an electric water pump 19b. The main battery 25 and the drive battery 26 are connected to the second outboard motor 2b. It should be noted that the configuration of the second outboard motor 2b is similar to that of the first outboard motor 2a, and hence, the detailed explanation thereof will be omitted.

The controller 6a of the first outboard motor 2a and the controller 6b of the second outboard motor 2b are connected through wireless communication. The controllers 6a and 6b of the first and second outboard motors 2a and 2b are communicable to each other, while being each supplied with electric power from the main battery 25. The controllers 6a and 6b of the first and second outboard motors 2a and 2b may be connected through wired communication. It should be noted that the controllers 6a and 6b of the first and second outboard motors 2a and 2b may not be necessarily configured to be communicable to each other.

The marine operating device 3 is disposed in a cockpit 30 set on the watercraft 1. As shown in FIG. 2, the marine operating device 3 includes a steering device 31, throttle levers 32a and 32b, and a plurality of switches 33. The steering device 31 is a device for operating the turning direction of the watercraft 1. The throttle lever 32a is an operating member for regulating a thrust generated by the first outboard motor 2a and switching the direction of the thrust between forward and rearward directions. The throttle lever 32b is an operating member for regulating a thrust generated by the second outboard motor 2b and switching the direction of the thrust between forward and rearward directions.

The plural switches 33 include a switch for starting each engine 11a, 11b, a switch for setting the vessel speed, and a switch for switching each outboard motor 2a, 2b among drive modes. Besides, the plural switches 33 may include a switch for connecting or disconnecting the main battery 25 and both the inverter 8a and the controller 6a to or from each other, and a switch for connecting or disconnecting the main battery 25 and both the inverter 8b and the controller 6b to or from each other.

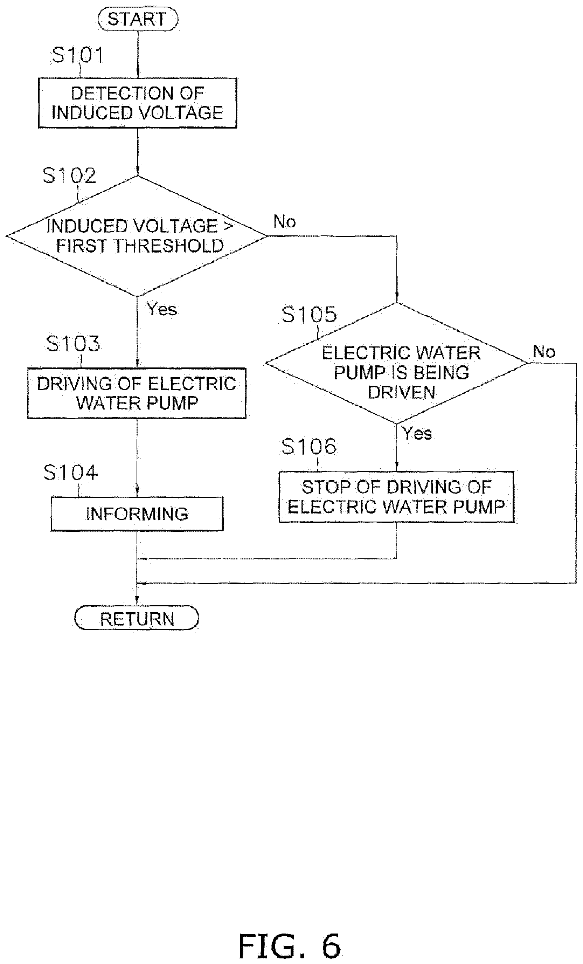

Next, a series of control processing to be executed by the controller 6a will be explained with reference to FIG. 6. FIG. 6 is a flowchart showing a series of control processing for protecting the inverter 8a to be executed by the controller 6a when the controller 6a is supplied with electric power. The series of control processing for protecting the inverter 8a is executed when the electric motor 12a is not being driven. It should be noted that the controller 6b also executes a series of control processing similar to the series of control processing herein executed by the controller 6a.

In step S101, the controller 6a receives a detection signal outputted from the voltage sensor 9a and detects induced voltage generated by the electric motor 12a.

In step S102, it is determined whether or not the induced voltage detected in step S101 is greater than a first threshold. When determining that the induced voltage detected in step S101 is greater than the first threshold, the controller 6a executes processing of step S103. In step S103, the controller 6a controls the relay 44a to drive the electric water pump 19a. Step S103 is exemplary protection control for protecting the inverter 8a.

In step S104, the controller 6a informs a watercraft operator of that the electric water pump 19a is being driven. As shown in FIG. 2, the marine propulsion system 100 may herein further include an informing section 36. The controller 6a informs the watercraft operator of that the electric water pump 19a is being driven by means of sound, light, indication displayed on a display device, or so forth through the informing section 36. Afterward, the controller 6a repeatedly executes the series of processing from step S101. It should be noted that step S104 may be omitted.

In step S102, when determining that the induced voltage detected in step S101 is less than or equal to the first threshold, the controller 6a executes processing of step S105. In step S105, the controller 6a determines whether or not the electric water pump 19a is being driven. When determining that the electric water pump 19a is being driven, the controller 6a executes processing of step S106.

In step S106, the controller 6a stops the electric water pump 19a from driving. In other words, the controller 6a stops the electric water pump 19a from driving when the induced voltage becomes less than or equal to the first threshold while the electric water pump 19a is being driven. At this time, the controller 6a stops the informing section 36 from executing the informing processing. Afterward, the controller 6a repeatedly executes the series of processing from step S101.

In step S105, when determining that the electric water pump 19a is not being driven, the controller 6a repeatedly executes the series of processing from step S101.

In the marine propulsion system 100 described above, when the induced voltage, generated by entrained rotation of the electric motor 12a, is greater than the first threshold, the controller 6a executes the protection control for protecting the inverter 8a. Specifically, when the induced voltage is greater than the first threshold, the controller 6a drives the electric water pump 19a so as to cool the inverter 8a. Accordingly, heating of the inverter 8a due to the induced voltage can be inhibited. As a result, the inverter 8a can be protected from the induced voltage generated by entrained rotation of the electric motor 12a.

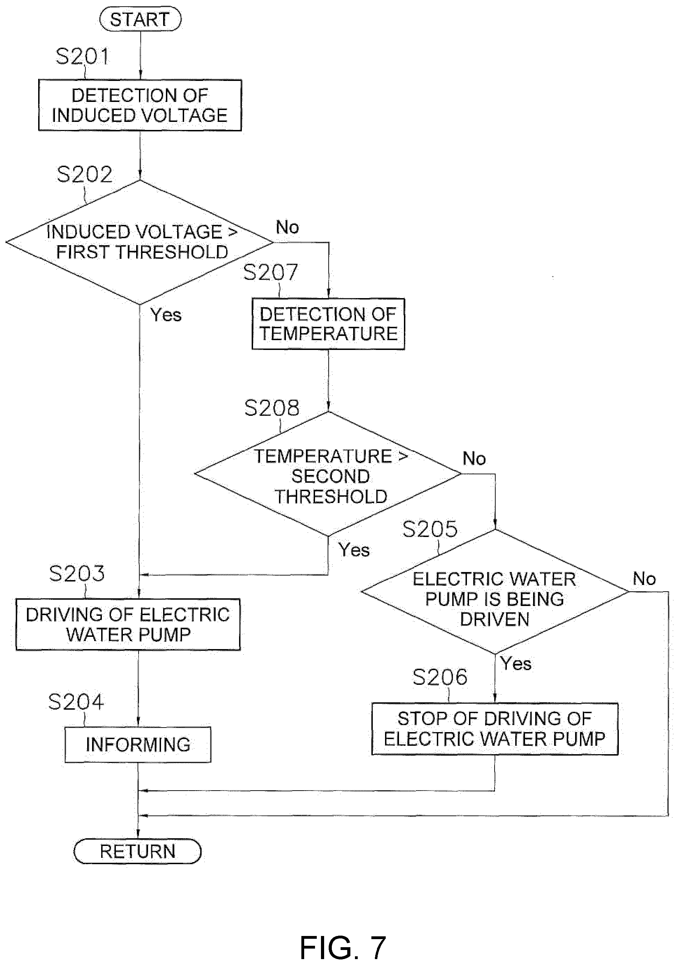

FIG. 7 is a flowchart showing a series of control processing to be executed by the controller 6a according to a second preferred embodiment. In the second preferred embodiment, when the temperature of the inverter 8a is greater than a second threshold, the controller 6a drives the electric water pump 19a. It should be noted that the series of control processing to be executed by the controller 6a as shown in FIG. 7 is obtained by adding processing of steps S207 and S208 to that in the first preferred embodiment and is, except for this, similar to that in the first preferred embodiment. Therefore, the series of processing of steps S201 to S206 is similar to that of steps S101 to S106 shown in FIG. 6, and explanation thereof will be hereinafter omitted.

In step S202, when determining that induced voltage detected in step S201 is less than or equal to the first threshold, the controller 6a executes processing of step S207. In step S207, the controller 6a receives a detection signal outputted from the temperature sensor 42a and detects the temperature of the inverter 8a.

In step S208, the controller 6a determines whether or not the temperature of the inverter 8a, detected in step S207, is greater than the second threshold. When determining that the temperature of the inverter 8a, detected in step S207, is greater than the second threshold, the controller 6a drives the electric water pump 19a (step S203). In step S208, when determining that the temperature of the inverter 8a is not greater than the second threshold, the controller 6a executes processing of step S205.

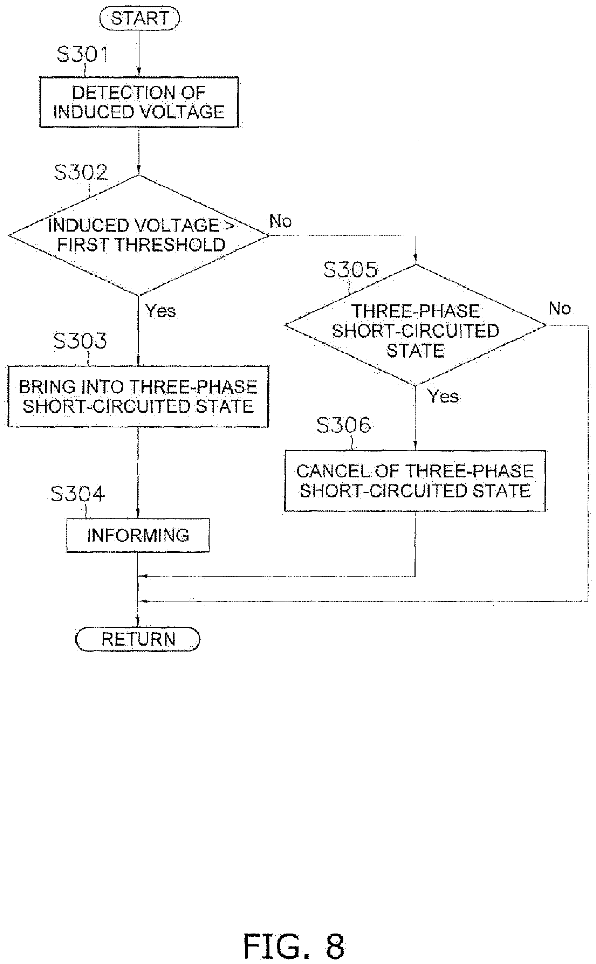

FIG. 8 is a flowchart showing a series of control processing to be executed by the controller 6a in a third preferred embodiment. The third preferred embodiment is different from the first preferred embodiment regarding the control processing for protecting the inverter 8a to be executed by the controller 6a. When described in detail, the controller 6a protects the inverter 8a by driving the electric water pump 19a in the first preferred embodiment, whereas the controller 6a protects the inverter 8a by bringing the inverter 8a into a three-phase short-circuit state.

Processing of step S301 is identical to that of step S101. Processing of step S302 is identical to that of step S102.

In step S303, the controller 6a brings the inverter 8a into the three-phase short-circuit state. Specifically, as shown in FIG. 5, for instance, the controller 6a controls the switching elements S1 to S3 to be turned off while controlling the switching elements S4 to S6 to be turned on. Accordingly, short-circuit current is caused to flow through the electric motor 12a. Hence, electric current due to the induced voltage can be prevented from flowing through the capacitor 41a. Step S303 is exemplary protection control for protecting the inverter 8a.

Processing of step S304 is similar to that of step S104. In step S305, the controller 6a determines whether or not the inverter 8a is in the three-phase short-circuit state. When determining that the inverter 8a is in the three-phase short-circuit state, the controller 6a executes processing of step S306. In step S306, the controller 6a cancels the three-phase short-circuit state of the inverter 8a. In other words, the controller 6a cancels the three-phase short-circuit state of the inverter 8a when the induced voltage becomes less than or equal to the first threshold while the inverter 8a is in the three-phase short-circuit state. Specifically, the controller 6a controls all the switching elements S1 to S6 to be turned off. It should be noted that in step S305, when determining that the inverter 8a is not in the three-phase short-circuit state, the controller 6a repeatedly executes the series of processing from step S301.

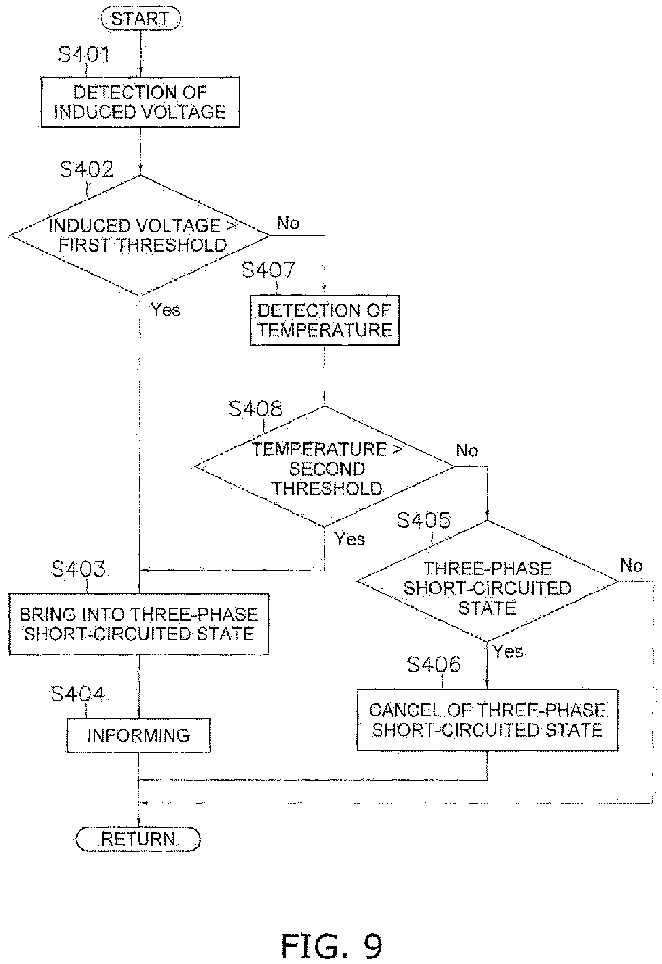

FIG. 9 is a flowchart showing a series of control processing executed by the controller 6a according to a fourth preferred embodiment. The series of control processing in the fourth preferred embodiment is obtained by adding processing of steps S207 and S208 in the second preferred embodiment to the series of processing in the third preferred embodiment, and is, except for this, similar to the series of processing in the third preferred embodiment. Processing of steps S401 to S406, when described in detail, is similar to processing of steps S301 to S306 shown in FIG. 8. Processing of steps S407 and S408 is similar to processing of steps S207 and S208 shown in FIG. 7.

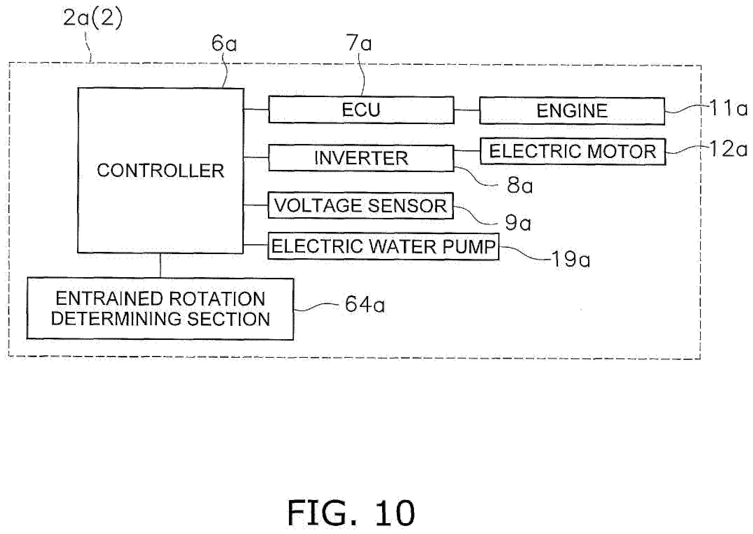

FIG. 10 is a block diagram showing a configuration of the first outboard motor 2a according to a fifth preferred embodiment. The first outboard motor 2a includes an entrained rotation determining section 64a. The entrained rotation determining section 64a determines whether or not entrained rotation of the electric motor 12a occurs, and outputs a determination result as an electric signal to the controller 6a. In the present preferred embodiment, the entrained rotation determining section 64a outputs the electric signal to the controller 6a when determining that entrained rotation of the electric motor 12a occurs.

The controller 6a executes protection control for protecting the inverter 8a when the entrained rotation determining section 64a determines that entrained rotation of the electric motor 12a occurs. For example, the entrained rotation determining section64a determines whether or not the electric motor 12a is being rotated even without being driven. For example, the entrained rotation determining section 64a may determine that entrained rotation of the electric motor 12a occurs when the electric motor 12a is being rotated at greater than a predetermined rotational speed even without being driven. The entrained rotation determining section 64a may determine whether or not entrained rotation of the electric motor 12a occurs based on an operating signal outputted from the marine operating device 3. The entrained rotation determining section 64a may be included in the controller 6a. For example, the controller 6a may determine that entrained rotation of the electric motor 12a occurs when the electric motor 12a is being rotated at greater than the predetermined rotational speed. The second outboard motor 2b includes an entrained rotation determining section as well, albeit this is not shown in the drawings.

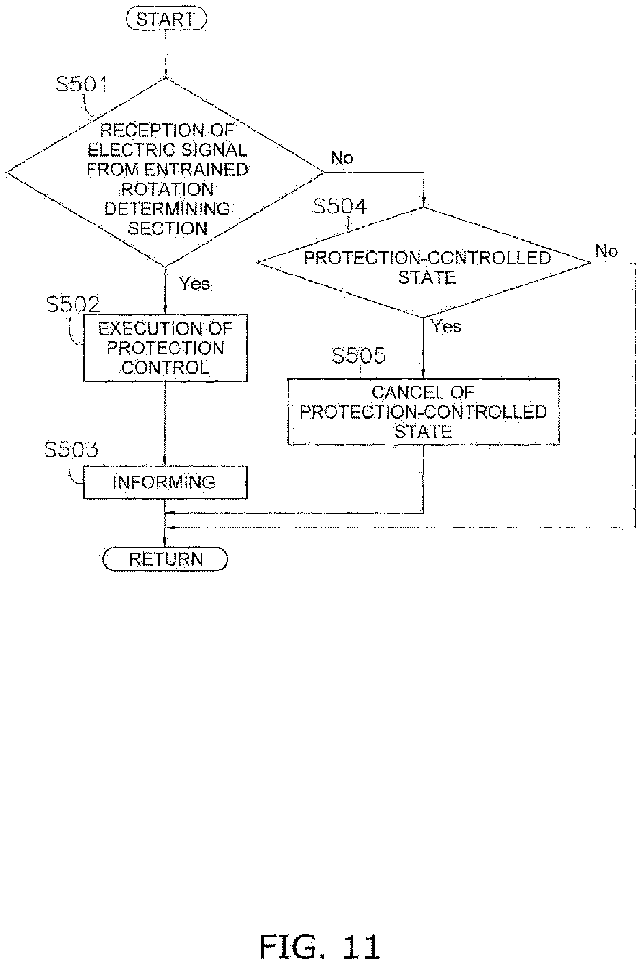

FIG. 11 is a flowchart showing a series of control processing executed by the controller 6a according to a fifth preferred embodiment. In step S501, the controller 6a determines whether or not the controller 6a has received an electric signal from the entrained rotation determining section 64a. When determining that the controller 6a has received the electric signal from the entrained rotation determining section 64a, the controller 6a executes processing of step S502.

In step S502, the controller 6a executes the protection control for protecting the inverter 8a as described above. In step S503, the controller 6a informs the watercraft operator of that the protection control is being executed.

In step S501, when determining that the controller 6a has not received the electric signal from the entrained rotation determining section 64a, the controller 6a executes processing of step S504. In step S504, the controller 6a determines whether or not the inverter 8a is in a protection-controlled state, i.e., whether or not the protection control is being executed. When determining that the protection control is being executed for the inverter 8a, the controller 6a executes processing of step S505. In step S505, the controller 6a cancels the protection-controlled state of the inverter 8a.

The preferred embodiments have been explained above. However, the present teaching is not limited to the preferred embodiments described above, and a variety of changes can be made. For example, the configuration of the outboard motor 2 and/or that of the marine operating device 3 may be changed without being limited to those in the preferred embodiments described above.

In the preferred embodiments described above, the plural outboard motors 2 are composed of two outboard motors, i.e., the first and second outboard motors 2a and 2b. Alternatively, the plural outboard motors 2 may be composed of three or more outboard motors. For example, the plural outboard motors 2 may further include a third outboard motor configured in similar manner to the first outboard motor 2a. The third outboard motor may be disposed between the first and second outboard motors 2a and 2b.

In the preferred embodiments described above, the outboard motor 2 has been exemplified as an exemplary marine propulsion device. However, the present teaching may be applied to an inboard/outboard motor.

In the preferred embodiments described above, the main battery 25 is provided for supplying electric power to the first and second outboard motors 2a and 2b. Alternatively, batteries may be provided in correspondence to the first and second outboard motors 2a and 2b, respectively. Yet alternatively, the drive battery 26 is not necessarily provided; the main battery 25 may also function as the drive battery 26.

In the preferred embodiments described above, the power transmission mechanism 13a is configured to transmit mechanical power to the propeller shaft 10a from either one of the engine 11a and the electric motor 12a. Alternatively, the power transmission mechanism 13a may include a mechanism for transmitting both mechanical power of the engine 11a and that of the electric motor 12a.

## Claims

1. A marine propulsion system (100) comprising:
a plurality of marine propulsion devices (2, 2a, 2b), each of the plurality of marine propulsion devices (2, 2a, 2b) including a propeller shaft (10a), an engine (11a, 11b), an electric motor (12a, 12b), a power transmission mechanism (13a), an inverter (8a, 8b), and a controller (6a, 6b), the power transmission mechanism (13a) is configured to transmit mechanical power to the propeller shaft (10a) from at least one of the engine (11a, 11b) and the electric motor (12a, 12b), the inverter (8a, 8b) being configured to output electric power inputted thereto to the electric motor (12a, 12b) after converting the electric power, the controller (6a, 6b) being configured to determine whether or not entrained rotation of the electric motor (12a, 12b) occurs and being configured to execute protection control for protecting the inverter (8a, 8b) when the controller (6a, 6b) determines that entrained rotation of the electric motor (12a, 12b) occurs, wherein the each of the plurality of marine propulsion devices (2, 2a, 2b) further includes a cooling water passage (18a) and an electric water pump (19a, 19b), the cooling water passage (18a) connected to the inverter (8a, 8b), the electric water pump (19a, 19b) connected to the cooling water passage (18a), and the controller (6a, 6b) is configured to cool the inverter (8a, 8b) by driving the electric water pump (19a, 19b) as the protection control.

2. A marine propulsion system (100) comprising:
a plurality of marine propulsion devices (2, 2a, 2b), each of the plurality of marine propulsion devices (2, 2a, 2b) including a propeller shaft (10a), an engine (11a, 11b), an electric motor (12a, 12b), a power transmission mechanism (13a), an inverter (8a, 8b), and a controller (6a, 6b), the power transmission mechanism (13a) is configured to transmit mechanical power to the propeller shaft (10a) from at least one of the engine (11a, 11b) and the electric motor (12a, 12b), the inverter (8a, 8b) being configured to output electric power inputted thereto to the electric motor (12a, 12b) after converting the electric power, the controller (6a, 6b) being configured to determine whether or not entrained rotation of the electric motor (12a, 12b) occurs and being configured to execute protection control for protecting the inverter (8a, 8b) when the controller (6a, 6b) determines that entrained rotation of the electric motor (12a, 12b) occurs, wherein the controller (6a, 6b) is configured to bring the inverter (8a, 8b) into a three-phase short-circuit state as the protection control.

3. A marine propulsion system (100) according to claim 1 or 2, wherein the each of the plurality of marine propulsion devices (2, 2a, 2b) further includes a voltage sensor (9a, 9b) configured to detect induced voltage generated by the electric motor (12a, 12b), and the controller (6a, 6b) is configured to determine that entrained rotation of the electric motor (12a, 12b) occurs when the induced voltage is greater than a first threshold while the electric motor (12a, 12b) is not being driven.

4. The marine propulsion system (100) according to claim 3, wherein in the each of the plurality of marine propulsion devices (2, 2a, 2b), the controller (6a, 6b) is configured to cancel the protection control when the induced voltage is less than or equal to the first threshold.

5. The marine propulsion system (100) according to any one of the claims 1 to 3, wherein the each of the plurality of marine propulsion devices (2, 2a, 2b) further includes a temperature sensor (42a) configured to detect a temperature of the inverter (8a, 8b), and
in the each of the plurality of marine propulsion devices (2, 2a, 2b), the controller (6a, 6b) is configured to determine that entrained rotation of the electric motor (12a, 12b) occurs when the temperature of the inverter (8a, 8b) is greater than a second threshold while the electric motor (12a, 12b) is being stopped from being driven.

6. The marine propulsion system (100) according to any one of the claims 1 to 5, further comprising:
an informing section (36) configured to inform a watercraft operator of that the controller (6a, 6b) has executed the protection control.

7. A method of controlling a marine propulsion system, the marine propulsion system (100) including a plurality of marine propulsion devices (2, 2a, 2b), each of the plurality of marine propulsion devices (2, 2a, 2b) including a propeller shaft (10a), an engine (11a, 11b), an electric motor (12a, 12b), a power transmission mechanism (13a) and an inverter (8a, 8b), the power transmission mechanism (13a) transmitting mechanical power to the propeller shaft (10a) from at least one of the engine (11a, 11b) and the electric motor (12a, 12b), the inverter (8a, 8b) outputting electric power inputted thereto to the electric motor (12a, 12b) after converting the electric motor (12a, 12b), the method comprising:
determining whether or not entrained rotation of the electric motor (12a, 12b) occurs; executing protection control for protecting the inverter (8a, 8b) when the controller (6a, 6b) determines that entrained rotation of the electric motor (12a, 12b) occurs;
detecting a temperature of the inverter (8a, 8b); and
determining that entrained rotation of the electric motor (12a, 12b) occurs when the temperature of the inverter (8a, 8b) is greater than a second threshold while the electric motor (12a, 12b) is being stopped from being driven.

8. The method according to claim 7, further comprising:
detecting induced voltage generated by the electric motor (12a, 12b); and
determining that entrained rotation of the electric motor (12a, 12b) occurs when the induced voltage is greater than a first threshold while the electric motor (12a, 12b) is not being driven.

9. The method according to claim 8, further comprising:
canceling the protection control when the induced voltage is less than or equal to the first threshold.

10. The method according to any one of the claims 7 to 9, wherein the each of the plurality of marine propulsion devices (2, 2a, 2b) further includes a cooling water passage (18a) and an electric water pump (19a, 19b), the cooling water passage (18a) connected to the inverter (8a, 8b), the electric water pump (19a, 19b) connected to the cooling water passage (18a), and
the protection control includes cooling the inverter (8a, 8b) by driving the electric water pump (19a, 19b).

11. The method according to any one of the claims 7 to 9, wherein the protection control includes bringing the inverter (8a, 8b) into a three-phase short-circuit state.

12. The method according to any one of the claims 7 to 11, further comprising:
informing a watercraft operator of that the inverter (8a, 8b) is under the protection control.

## Patentansprüche

1. Ein Schiffsantriebssystem (100), das umfasst:
eine Mehrzahl von Schiffsantriebsvorrichtungen (2, 2a, 2b), jede der Mehrzahl von Schiffsantriebsvorrichtungen (2, 2a, 2b) enthält eine Propellerwelle (10a), eine Maschine (11a, 11b), einen Elektromotor (12a, 12b), einen Leistungsübertragungsmechanismus (13a), einen Inverter (8a, 8b) und eine Steuerung (6a, 6b), der Leistungsübertragungsmechanismus (13a) ist konfiguriert, um mechanische Leistung von mindestens einem von der Maschine (11a, 11b) und dem Elektromotor (12a, 12b) auf die Propellerwelle (10a) zu übertragen, der Inverter (8a, 8b) ist konfiguriert, um elektrische Leistung, die ihm zugeführt ist, an den Elektromotor (12a, 12b), nach Umwandlung der elektrischen Leistung, auszugeben, die Steuerung (6a, 6b) ist konfiguriert, um zu bestimmen, ob eine mitgenommene Drehung des Elektromotors (12a, 12b) auftritt oder nicht, und konfiguriert, um eine Schutzsteuerung zum Schutz des Inverters (8a, 8b) auszuführen, wenn die Steuerung (6a, 6b) bestimmt, dass eine mitgenommene Drehung des Elektromotors (12a, 12b) auftritt, wobei jede der Mehrzahl von Schiffsantriebsvorrichtungen (2, 2a, 2b) weiterhin einen Kühlwasserdurchlass (18a) und eine elektrische Wasserpumpe (19a, 19b) enthält, der Kühlwasserdurchlass (18a) mit dem Inverter (8a, 8b) verbunden ist, die elektrische Wasserpumpe (19a, 19b) mit dem Kühlwasserdurchlass (18a) verbunden ist, und die Steuerung (6a, 6b) konfiguriert ist, den Inverter (8a, 8b) zu kühlen, indem die elektrische Wasserpumpe (19a, 19b) als Schutzsteuerung angetrieben ist.

2. Ein Schiffsantriebssystem (100), das umfasst:
eine Mehrzahl von Schiffsantriebsvorrichtungen (2, 2a, 2b), jede der Mehrzahl von Schiffsantriebsvorrichtungen (2, 2a, 2b) enthält eine Propellerwelle (10a), eine Maschine (11a, 11b), einen Elektromotor (12a, 12b), einen Leistungsübertragungsmechanismus (13a), einen Inverter (8a, 8b) und eine Steuerung (6a, 6b), der Leistungsübertragungsmechanismus (13a) ist konfiguriert, um mechanische Leistung von mindestens einem von der Maschine (11a, 11b) und dem Elektromotor (12a, 12b) auf die Propellerwelle (10a) zu übertragen, der Inverter (8a, 8b) ist konfiguriert, um elektrische Leistung, die ihm zugeführt ist, an den Elektromotor (12a, 12b), nach Umwandlung der elektrischen Leistung, auszugeben, die Steuerung (6a, 6b) ist konfiguriert, um zu bestimmen, ob eine mitgenommene Drehung des Elektromotors (12a, 12b) auftritt oder nicht, und konfiguriert, um eine Schutzsteuerung zum Schutz des Inverters (8a, 8b) auszuführen, wenn die Steuerung (6a, 6b) bestimmt, dass eine mitgenommene Drehung des Elektromotors (12a, 12b) auftritt, wobei die Steuerung (6a, 6b) konfiguriert ist, um den Inverter (8a, 8b) als die Schutzsteuerung in einen Drei-Phasen-Kurzschluss-Zustand bringt.

3. Ein Schiffsantriebssystem (100) gemäß Anspruch 1 oder 2, wobei jede der Mehrzahl von Schiffsantriebsvorrichtungen (2, 2a, 2b) weiter enthält
einen Spannungssensor (9a, 9b), der konfiguriert ist, um eine induzierte Spannung, die von dem Elektromotor (12a, 12b) erzeugt ist, zu erfassen, und die Steuerung (6a, 6b) konfiguriert ist, um festzustellen, dass eine mitgenommene Drehung des Elektromotors (12a, 12b) auftritt, wenn die induzierte Spannung größer als ein erster Schwellenwert ist, während der Elektromotor (12a, 12b) nicht angetrieben ist.

4. Das Schiffsantriebssystem (100) gemäß Anspruch 3, wobei in jeder der Mehrzahl von Schiffsantriebsvorrichtungen (2, 2a, 2b), die Steuerung (6a, 6b) konfiguriert ist, um die Schutzsteuerung aufzuheben, wenn die induzierte Spannung kleiner als oder gleich dem ersten Schwellenwert ist.

5. Das Schiffsantriebssystem (100) gemäß irgendeinem der Ansprüche 1 bis 3, wobei jede der Mehrzahl von Schiffsantriebsvorrichtungen (2, 2a, 2b) weiterhin einen Temperatursensor (42a), der konfiguriert ist, um eine Temperatur des Inverters (8a, 8b) zu erfassen, enthält und
in jeder der Mehrzahl von Schiffsantriebsvorrichtungen (2, 2a, 2b), die Steuerung (6a, 6b) konfiguriert ist, um festzustellen, dass eine mitgenommene Drehung des Elektromotors (12a, 12b) auftritt, wenn die Temperatur des Inverters (8a, 8b) größer als ein zweiter Schwellenwert ist, während der Elektromotor (12a, 12b) nicht angetrieben ist.

6. Das Schiffsantriebssystem (100) gemäß irgendeinem der Ansprüche 1 bis 5, das weiter umfasst:
einen Informationsabschnitt (36), der konfiguriert ist, um einen Wasserfahrzeugführer darüber informiert, dass die Steuerung (6a, 6b) die Schutzsteuerung ausgeführt hat.

7. Verfahren zum Steuern eines Schiffsantriebssystems, wobei das Schiffsantriebssystem (100) eine Mehrzahl von Schiffsantriebsvorrichtungen (2, 2a, 2b), jede der Mehrzahl von Schiffsantriebsvorrichtungen (2, 2a, 2b) enthält eine Propellerwelle (10a), eine Maschine (11a, 11b), einen Elektromotor (12a, 12b), einen Leistungsübertragungsmechanismus (13a), einen Inverter (8a, 8b) und eine Steuerung (6a, 6b), der Leistungsübertragungsmechanismus (13a) ist konfiguriert, um mechanische Leistung von mindestens einem von der Maschine (11a, 11b) und dem Elektromotor (12a, 12b) auf die Propellerwelle (10a) zu übertragen, der Inverter (8a, 8b) ist konfiguriert, um elektrische Leistung, die ihm zugeführt ist, an den Elektromotor (12a, 12b), nach Umwandlung der elektrischen Leistung, auszugeben, das Verfahren umfasst:
Bestimmen, ob eine mitgenommene Drehung des Elektromotors (12a, 12b) auftritt oder nicht; Ausführen einer Schutzsteuerung zum Schutz des Inverters (8a, 8b), wenn die Steuerung (6a, 6b) bestimmt, dass eine mitgenommene Drehung des Elektromotors (12a, 12b) auftritt;
Erfassen einer Temperatur des Inverters (8a, 8b); und
Bestimmen, dass eine mitgenommene Drehung des Elektromotors (12a, 12b) auftritt, wenn die Temperatur des Inverters (8a, 8b) größer als ein zweiter Schwellenwert ist, während der Elektromotor (12a, 12b) nicht angetrieben ist.

8. Das Verfahren gemäß Anspruch 7, das weiter umfasst:
Erfassen der induzierten Spannung, die von dem Elektromotor (12a, 12b) erzeugt ist; und
Bestimmen, dass eine mitgenommene Drehung des Elektromotors (12a, 12b) auftritt, wenn die induzierte Spannung größer als ein erster Schwellenwert ist, während der Elektromotor (12a, 12b) nicht angetrieben ist.

9. Das Verfahren gemäß Anspruch 8, das weiter umfasst:
Aufhebung der Schutzsteuerung, wenn die induzierte Spannung kleiner als oder gleich dem ersten Schwellenwert ist.

10. Das Verfahren gemäß irgendeinem der Ansprüche 7 bis 9, wobei jede der Mehrzahl von Schiffsantriebsvorrichtungen (2, 2a, 2b) weiter einen Kühlwasserdurchlass (18a) und eine elektrische Wasserpumpe (19a, 19b) enthält, der Kühlwasserdurchlass (18a) ist mit dem Inverter (8a, 8b) verbunden, die elektrische Wasserpumpe (19a, 19b) ist mit dem Kühlwasserdurchlass (18a) verbunden, die elektrische Wasserpumpe (19a, 19b) ist mit dem Inverter (8a) verbunden, und
die Schutzsteuerung enthält die Kühlung des Inverters (8a, 8b) durch den Antrieb der elektrischen Wasserpumpe (19a, 19b).

11. Das Verfahren gemäß irgendeinem der Ansprüche 7 bis 9, wobei die Schutzsteuerung beinhaltet, dass der Inverter (8a, 8b) in einen Drei-Phasen-Kurzschluss-Zustand gebracht wird.

12. Das Verfahren gemäß irgendeinem der Ansprüche 7 bis 11, das weiter umfasst:
Informieren des Wasserfahrzeugführer darüber, dass der Inverter (8a, 8b) unter Schutzsteuerung steht.

## Revendications

1. Système de propulsion marine (100) comprenant :
une pluralité de dispositifs de propulsion marine (2, 2a, 2b), chaque dispositif de la pluralité de dispositifs de propulsion marine (2, 2a, 2b) comprenant un arbre d'hélice (10a), un moteur thermique (11a, 11b), un moteur électrique (12a, 12b), un mécanisme de transmission de puissance (13a), un onduleur (8a, 8b) et un contrôleur (6a, 6b), le mécanisme de transmission de puissance (13a) étant configuré pour transmettre une puissance mécanique à l'arbre d'hélice (10a) provenant d'au moins un moteur parmi le moteur thermique (11a, 11b) et le moteur électrique (12a, 12b), l'onduleur (8a, 8b) étant configuré pour délivrer de l'énergie électrique qui lui est appliquée au moteur électrique (12a, 12b) après conversion de l'énergie électrique, le contrôleur (6a, 6b) étant configuré pour déterminer si la rotation entraînée du moteur électrique (12a, 12b) se produit ou non et pour exécuter un contrôle de protection pour protéger l'onduleur (8a, 8b) quand le contrôleur (6a, 6b) détermine qu'une rotation entraînée du moteur électrique (12a, 12b) se produit, dans lequel chaque dispositif de la pluralité de dispositifs de propulsion marine (2, 2a, 2b) comprend en outre un passage d'eau de refroidissement (18a) et une pompe à eau électrique (19a, 19b), le passage d'eau de refroidissement (18a) est connecté à l'onduleur (8a, 8b), la pompe à eau électrique (19a, 19b) est connectée au passage d'eau de refroidissement (18a), et le contrôleur (6a, 6b) est configuré pour refroidir l'onduleur (8a, 8b) en entraînant la pompe à eau électrique (19a, 19b) en tant que contrôle de protection.

2. Système de propulsion marine (100) comprenant :
une pluralité de dispositifs de propulsion marine (2, 2a, 2b), chaque dispositif de la pluralité de dispositifs de propulsion marine (2, 2a, 2b) comprenant un arbre d'hélice (10a), un moteur thermique (11a, 11b), un moteur électrique (12a, 12b), un mécanisme de transmission de puissance (13a), un onduleur (8a, 8b) et un contrôleur (6a, 6b), le mécanisme de transmission de puissance (13a) étant configuré pour transmettre une puissance mécanique à l'arbre d'hélice (10a) provenant d'au moins un moteur parmi le moteur thermique (11a, 11b) et le moteur électrique (12a, 12b), l'onduleur (8a, 8b) étant configuré pour délivrer de l'énergie électrique qui lui est appliquée au moteur électrique (12a, 12b) après conversion de l'énergie électrique, le contrôleur (6a, 6b) étant configuré pour déterminer si la rotation entraînée du moteur électrique (12a, 12b) se produit ou non et pour exécuter un contrôle de protection pour protéger l'onduleur (8a, 8b) quand le contrôleur (6a, 6b) détermine qu'une rotation entraînée du moteur électrique (12a, 12b) se produit, dans lequel le contrôleur (6a, 6b) est configuré pour amener l'onduleur (8a, 8b) dans un état de court-circuit triphasé en tant que contrôle de protection.

3. Système de propulsion marine (100) selon la revendication 1 ou 2, dans lequel chaque dispositif de la pluralité de dispositifs de propulsion marine (2, 2a, 2b) comprend en outre un capteur de tension (9a, 9b) configuré pour détecter la tension induite générée par le moteur électrique (12a, 12b), et le contrôleur (6a, 6b) est configuré pour déterminer que la rotation entraînée du moteur électrique (12a, 12b) se produit quand la tension induite est supérieure à un premier seuil alors que le moteur électrique (12a, 12b) n'est pas entraîné.

4. Système de propulsion marine (100) selon la revendication 3, dans lequel, dans chaque dispositif de la pluralité de dispositifs de propulsion marine (2, 2a, 2b), le contrôleur (6a, 6b) est configuré pour annuler le contrôle de protection quand la tension induite est inférieure ou égale au premier seuil.

5. Système de propulsion marine (100) selon l'une quelconque des revendications 1 à 3, dans lequel chaque dispositif de la pluralité de dispositifs de propulsion marine (2, 2a, 2b) comprend en outre un capteur de température (42a) configuré pour détecter la température de l'onduleur (8a, 8b), et dans chaque dispositif de la pluralité de dispositifs de propulsion marine (2, 2a, 2b), le contrôleur (6a, 6b) est configuré pour déterminer qu'une rotation entraînée du moteur électrique (12a, 12b) se produit quand la température de l'onduleur (8a, 8b) est supérieure à un deuxième seuil alors que l'entraînement du moteur électrique (12a, 12b) est arrêté.

6. Système de propulsion marine (100) selon l'une quelconque des revendications 1 à 5, comprenant en outre :
une section d'information (36) configurée pour informer un conducteur d'embarcation du fait que le contrôleur (6a, 6b) a exécuté le contrôle de protection.

7. Procédé de contrôle d'un système de propulsion marine, le système de propulsion marine (100) comprenant une pluralité de dispositifs de propulsion marine (2, 2a, 2b), chaque dispositif de la pluralité de dispositifs de propulsion marine (2, 2a, 2b) comprenant un arbre d'hélice (10a), un moteur thermique (11a, 11b), un moteur électrique (12a, 12b), un mécanisme de transmission de puissance (13a) et un onduleur (8a, 8b), le mécanisme de transmission de puissance (13a) transmettant une puissance mécanique à l'arbre d'hélice (10a) provenant d'au moins un moteur parmi le moteur thermique (11a, 11b) et le moteur électrique (12a, 12b), l'onduleur (8a, 8b) délivrant l'énergie électrique qui lui est appliquée au moteur électrique (12a, 12b) après conversion de l'énergie électrique, le procédé comprenant :
la détermination du fait qu'il se produit ou non une rotation entraînée du moteur électrique (12a, 12b) ;
l'exécution d'un contrôle de protection pour protéger l'onduleur (8a, 8b) quand le contrôleur (6a, 6b) détermine qu'une rotation entraînée du moteur électrique (12a, 12b) se produit ;
la détection d'une température de l'onduleur (8a, 8b) ; et
la détermination du fait que la rotation entraînée du moteur électrique (12a, 12b) se produit quand la température de l'onduleur (8a, 8b) est supérieure à un deuxième seuil alors que l'entraînement du moteur électrique (12a, 12b) est arrêté.

8. Procédé selon la revendication 7, comprenant en outre :
la détection de la tension induite générée par le moteur électrique (12a, 12b) ; et
la détermination du fait que la rotation entraînée du moteur électrique (12a, 12b) se produit quand la tension induite est supérieure à un premier seuil alors que le moteur électrique (12a, 12b) n'est pas entraîné.

9. Procédé selon la revendication 8, comprenant en outre :
l'annulation du contrôle de protection quand la tension induite est inférieure ou égale au premier seuil.

10. Procédé selon l'une quelconque des revendications 7 à 9, dans lequel chaque dispositif de la pluralité de dispositifs de propulsion marine (2, 2a, 2b) comprend en outre un passage d'eau de refroidissement (18a) et une pompe à eau électrique (19a, 19b), le passage d'eau de refroidissement (18a) est connecté à l'onduleur (8a, 8b), la pompe à eau électrique (19a, 19b) est connectée au passage d'eau de refroidissement (18a), et le contrôle de protection comprend le refroidissement de l'onduleur (8a, 8b) en entraînant la pompe à eau électrique (19a, 19b).

11. Procédé selon l'une quelconque des revendications 7 à 9, dans lequel le contrôle de protection comprend la mise de l'onduleur (8a, 8b) dans un état de court-circuit triphasé.

12. Procédé selon l'une quelconque des revendications 7 à 11, comprenant en outre :
la transmission d'information à un conducteur d'embarcation du fait que l'onduleur (8a, 8b) est sous le contrôle de protection.
